# EUROPEAN PATENT APPLICATION

(11) **EP 4 382 552 A1**
(43) Date of publication of application: **12.06.2024**
(21) Application number: 22852759.4
(22) Date of filing: 30.06.2022
(51) Int. Cl.: C08J 3/00

(54) **CROSSLINKED ELASTOMER AND METHOD FOR PRODUCING SAME**

(30) Priority: 05.08.2021 JP 2021129376
(71) Applicant: BRIDGESTONE CORPORATION, Chuo-ku Tokyo 104-8340 (JP)
(72) Inventor: KAWADA, Midori, Tokyo 104-8340 (JP); HORIKAWA, Yasuo, Tokyo 104-8340 (JP); MIYANO, Mari, Tokyo 104-8340 (JP)
(74) Representative: Marks & Clerk LLP
(86) International application number: PCT/JP2022/026425
(87) International publication number: WO 2023/013333

(57) **Abstract**

Provided is a crosslinked elastomer that can easily be decrosslinked. The crosslinked elastomer is obtained through crosslinking of a diene elastomer that has a vinyl bond content of 30 mass% or less and a weight-average molecular weight of 1,000 or more. The crosslinked elastomer includes a diboronic acid ester skeleton unit represented by a specific general formula (1) at a crosslinking site.

## Description

### TECHNICAL FIELD

The present disclosure relates to a crosslinked elastomer and a method of producing the same.

### BACKGROUND

Recycling of vulcanized rubber (crosslinked rubber) in tires, etc. after use has been promoted in recent times in consideration of environmental issues and resource conservation. Although the devulcanization of vulcanized rubber is commonly known as a recycling technique for vulcanized rubber, this technique has a drawback of poor energy efficiency due to the extremely high temperature required in a devulcanization reaction.

Therefore, techniques for causing decomposition of vulcanized rubber by methods other than devulcanization are being studied. For example, Patent Literature (PTL) 1 discloses a decomposition and recovery method for vulcanized rubber in which vulcanized rubber is caused to decompose through a lipid peroxidation reaction, and then lipid is removed in alcohol having an alkali added thereto so as to recover rubber content. PTL 1 discloses that this method has a low decomposition reaction temperature, excellent energy efficiency, and a fast decomposition rate and yields a decomposition product that is easy to recycle and recover.

### CITATION LIST

### Patent Literature

PTL 1: JP2011-153272A

### SUMMARY

### (Technical Problem)

However, the technique described in PTL 1 broadly takes vulcanized rubbers as decomposition subjects without giving any consideration to rubbers (crosslinked elastomers) crosslinked by methods other than vulcanization (sulfur crosslinking).

Moreover, from viewpoints of versatility and more effective utilization of materials, it would be extremely useful to focus on crosslinked elastomers themselves so as to develop a crosslinked elastomer that can easily be decrosslinked and that can also be recrosslinked (i.e., a crosslinked elastomer having "reversible crosslinkability").

Accordingly, the present disclosure addresses a problem of providing a crosslinked elastomer that can easily be decrosslinked.

The present disclosure also addresses a problem of providing a method of producing a crosslinked elastomer by which the aforementioned crosslinked elastomer can easily be produced.

### (Solution to Problem)

As a result of diligent studies conducted with the aim of resolving the problems set forth above, the inventors discovered that a specific crosslinked elastomer can easily be decrosslinked, thereby leading to completion of the present disclosure. Specifically, primary features of the present disclosure for resolving the problems set forth above are as follows.

A crosslinked elastomer according to the present disclosure is a crosslinked elastomer obtained through crosslinking of a diene elastomer, wherein
the diene elastomer has a vinyl bond content of 30 mass% or less and a weight-average molecular weight of 1,000 or more, and
the crosslinked elastomer includes, at a crosslinking site, a diboronic acid ester skeleton unit represented by general formula (1), shown below, 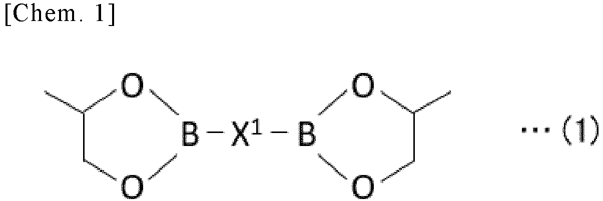
where, in general formula (1), X¹ is a single bond or any divalent group.

A method of producing a crosslinked elastomer according to the present disclosure is a method of producing the crosslinked elastomer set forth above, comprising crosslinking the diene elastomer in the presence of a radical initiator using a diboronic acid ester compound represented by general formula (2), shown below, 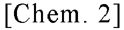 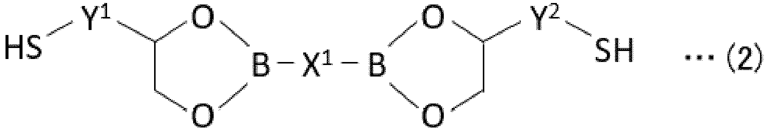 where, in general formula (2), X¹ is a single bond or any divalent group, and Y¹ and Y² are each independently a single bond or a divalent hydrocarbon group.

### (Advantageous Effect)

According to the present disclosure, it is possible to provide a crosslinked elastomer that can easily be decrosslinked.

Moreover, according to the present disclosure, it is possible to provide a method of producing a crosslinked elastomer by which the aforementioned crosslinked elastomer can easily be produced.

### DETAILED DESCRIPTION

The following describes embodiments of the present disclosure. However, the following description is intended for illustrative purposes only and is not intended to limit the scope of the present disclosure in any way.

### (Crosslinked elastomer)

A crosslinked elastomer according to one embodiment of the present disclosure (hereinafter, also referred to as "the crosslinked elastomer of the present embodiment") is a crosslinked elastomer obtained through crosslinking of a diene elastomer, wherein
the diene elastomer has a vinyl bond content of 30 mass% or less and a weight-average molecular weight of 1,000 or more, and
the crosslinked elastomer includes, at a crosslinking site, a diboronic acid ester skeleton unit represented by general formula (1), shown below, 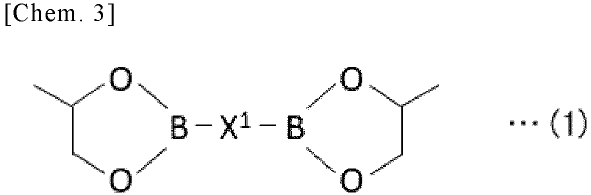
where, in general formula (1), X¹ is a single bond or any divalent group.

Crosslinking via the diboronic acid ester skeleton unit described above is not bonding through sulfur as in typical vulcanized rubber, and thus bond breaking can easily be achieved by a specific method. Moreover, the crosslinked elastomer of the present embodiment can easily be produced by a production method described further below.

Furthermore, versatile use of the crosslinked elastomer of the present embodiment for various rubber articles can be expected since the crosslinked elastomer can be further recrosslinked after undergoing decrosslinking.

Note that a filler such as carbon black may be dispersed in the crosslinked elastomer of the present embodiment as a result of being compounded during production of the crosslinked elastomer. In a case in which a filler is dispersed in the crosslinked elastomer, the amount of this filler relative to 100 parts by mass of the crosslinked elastomer can be set as 10 parts by mass or more, and can be set as 100 parts by mass or less.

The crosslinked elastomer of the present embodiment may include a sulfur crosslink in addition to a crosslink including the diboronic acid ester skeleton unit described above as a result of a specific vulcanization system being compounded during production of the crosslinked elastomer.

### <Diene elastomer>

The crosslinked elastomer of the present embodiment is obtained through crosslinking of a diene elastomer. In other words, the crosslinked elastomer of the present embodiment is a crosslinked product of a diene elastomer. The diene elastomer is an elastomer that includes at least diene units and may be natural rubber (NR), butadiene rubber (BR), styrene-butadiene rubber (SBR), isoprene rubber (IR), chloroprene rubber (CR), or the like, for example. The diene elastomer may be one type of diene elastomer used individually or may be two or more types of diene elastomers used in combination. Of these examples, butadiene rubber (BR) and styrene-butadiene rubber (SBR) are preferable as the diene elastomer from a viewpoint of sufficiently ensuring mechanical strength of a rubber article such as a tire.

The diene elastomer that is used in the crosslinked elastomer of the present embodiment has a vinyl bond content of 30 mass% or less. In a situation in which the vinyl bond content of the diene elastomer exceeds 30 mass%, forming is impaired due to the occurrence of gelation during heating and forming of the crosslinked elastomer. As a consequence, it is not possible to maintain the desired quality upon use in a rubber article such as a tire. From the same viewpoint, the vinyl bond content of the diene elastomer is preferably 28 mass% or less, and more preferably 26 mass% or less. On the other hand, although no specific limitations are placed on the lower limit for the vinyl bond content of the diene elastomer, the vinyl bond content is preferably 3 mass% or more, more preferably 5 mass% or more, even more preferably 8 mass% or more, and particularly preferably 10 mass% or more from a viewpoint of forming an appropriate amount of the diboronic acid ester skeleton unit represented by general formula (1) in the crosslinked elastomer.

Note that the vinyl bond content of the diene elastomer referred to in the present specification is the mass proportion of units that are diene units and that are vinyl bonded among the overall diene elastomer. In other words, the vinyl bond content of the diene elastomer is not the proportion constituted by vinyl bonded units among diene units.

The diene elastomer that is used in the crosslinked elastomer of the present embodiment has a weight-average molecular weight (Mw) of 1,000 or more. In a situation in which the weight-average molecular weight of the diene elastomer is less than 1,000, there is insufficient entanglement in the crosslinked elastomer, and, as a result, adequate mechanical strength cannot be displayed upon use in a rubber article such as a tire. From the same viewpoint, the weight-average molecular weight of the diene elastomer is preferably 5,000 or more, more preferably 10,000 or more, and even more preferably 15,000 or more. Moreover, the weight-average molecular weight is preferably 2,000,000 or less, and more preferably 1,000,000 or less.

Note that the weight-average molecular weight (Mw) can be determined by gel permeation chromatography (GPC) with polystyrene as a standard substance.

### <Diboronic acid ester skeleton unit>

The crosslinked elastomer of the present embodiment includes a diboronic acid ester skeleton unit represented by the following general formula (1) at a crosslinking site. 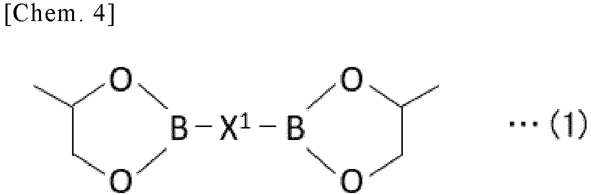 (In general formula (1), X¹ is a single bond or any divalent group.) This diboronic acid ester skeleton unit is typically derived from a structure of a crosslinking agent that is used in production of the crosslinked elastomer.

The divalent group that can constitute X¹ in general formula (1) may be a hydrocarbon group, for example, specific examples of which include linear and branched aliphatic groups (alkylene groups, alkenylene groups, and alkynylene groups) having a carbon number of 1 to 10; and aromatic-containing groups having a carbon number of 6 to 20 (1,2-phenylene group, 1,3-phenylene group, 1,4-phenylene group, 1,4-naphthylene group, 1,5-naphthylene group, 2,6-naphthylene group, 4,4'-biphenylene group, etc.). Moreover, -O-, -S-, -O-C(=O)-, -C(=O)-O-, -O-C(=O)-O-, -NR²-C(=O)-, -C(=O)-NR²-, -NR²-, or -C(=O)- may be interposed in the aforementioned aliphatic groups and aromatic-containing groups. Note that R² represents a hydrogen atom or an alkyl group having a carbon number of 1 to 6.

The diboronic acid ester skeleton unit in the crosslinked elastomer of the present embodiment is preferably bonded to a carbon that is a constituent of a vinyl group remaining in a vinyl bonded diene unit in the diene elastomer. Moreover, bonding of the diboronic acid ester skeleton unit and the diene elastomer described above may be direct bonding or may be bonding via any group (for example, an alkylene group having a carbon number of 1 to 3).

The proportion constituted by the diboronic acid ester skeleton unit described above in the crosslinked elastomer of the present embodiment is preferably 17 mass% or less. In this case, adequate elastomer properties can be retained in the crosslinked elastomer. From the same viewpoint, the proportion constituted by the diboronic acid ester skeleton unit in the crosslinked elastomer is more preferably 14 mass% or less, and even more preferably 10 mass% or less. On the other hand, although no specific limitations are placed on the lower limit for the proportion constituted by the diboronic acid ester skeleton unit in the crosslinked elastomer so long as this proportion is more than 0 mass%, the proportion is preferably 1 mass% or more, and more preferably 2 mass% or more from a viewpoint of increasing strength to a similar degree as with sulfur crosslinking.

Note that the proportion constituted by the diboronic acid ester skeleton unit in the crosslinked elastomer can be calculated based on the amounts of the diene elastomer and a diboronic acid ester compound that are used in production of the crosslinked elastomer.

The crosslinked elastomer of the present embodiment can suitably be used in a tire but is not specifically limited thereto. Alternatively, the crosslinked elastomer of the present embodiment can be used in a rubber article other than a tire. For example, the crosslinked elastomer of the present embodiment can be used in anti-vibration rubber, seismic isolation rubber, belts (conveyor belts), rubber crawlers, various types of hoses, and so forth.

### <Decrosslinking of crosslinked elastomer>

The crosslinked elastomer of the present embodiment can easily be decrosslinked by, for example, causing contact of the crosslinked elastomer of the present embodiment with a monoboronic acid compound represented by the following general formula (3) in the presence of an organic solvent. 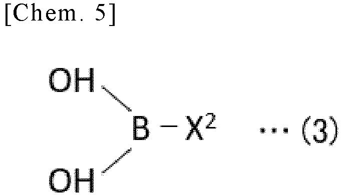 (In general formula (3), X² is hydrogen or any monovalent group.) In this contacting step, an exchange reaction occurs at the crosslinking site of the crosslinked elastomer, thereby resulting in crosslinking via the diboronic acid ester skeleton unit being replaced by bonding of the monoboronic acid compound. During the above, two elastomer crosslinking sites that are linked typically each become capped by a functional group represented by the following general formula (4): 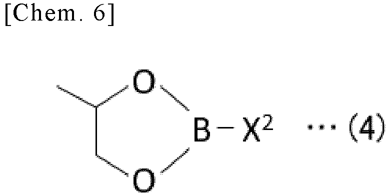 and thus return to a non-crosslinked state.

The organic solvent preferably has an SP value of not less than 7 (cal/cm³)^{1/2} and not more than 10 (cal/cm³)^{1/2}. In this case, compatibility with the crosslinked elastomer increases, and the exchange reaction can more reliably be instigated.

Note that the SP value can be calculated in accordance with the Hansen method. Also note that the organic solvent may be a single solvent or may be a mixed solvent.

The monoboronic acid compound is a compound including one boronic acid. The monovalent group that can constitute X² in general formula (3) may be a hydrocarbon group, for example, specific examples of which include linear and branched aliphatic groups (alkyl groups, alkenyl groups, and alkynyl groups) having a carbon number of 1 to 10; aromatic-containing groups having a carbon number of 6 to 20 (phenyl group, naphthyl group, biphenyl group, etc.); and heteroaromatic groups (2-furyl group, etc.). Moreover, -O-, -S-, -O-C(=O)-, -C(=O)-O-, -O-C(=O)-O-, -NR²-C(=O)-, -C(=O)-NR²-, -NR²-, or -C(=O)- may be interposed in the aforementioned aliphatic groups and aromatic-containing groups. Note that R² represents a hydrogen atom or an alkyl group having a carbon number of 1 to 6.

The monovalent group that can constitute X² in general formula (3) is preferably equivalent to a group having hydrogen bonded at one of the bonding sites of the divalent group that can constitute X¹ in the previously described general formula (1). As one example, in a case in which a crosslinked elastomer for which X¹ in general formula (1) is a phenylene group is used, it is preferable to use a monoboronic acid compound for which X² in general formula (3) is a phenyl group. In this case, the exchange reaction can more effectively be instigated.

In the contacting step described above, a molar abundance ratio of the monoboronic acid compound relative to the diboronic acid ester skeleton unit (monoboronic acid compound/diboronic acid ester skeleton unit) is preferably more than 2 and not more than 5. In this case, linking of elastomer can effectively be undone, and further recrosslinking can easily be performed after decrosslinking.

### (Method of producing crosslinked elastomer)

A method of producing a crosslinked elastomer according to one embodiment of the present disclosure (hereinafter, also referred to as "the production method of the present embodiment") is a method of producing the crosslinked elastomer of the present embodiment set forth above, comprising crosslinking the diene elastomer in the presence of a radical initiator using a diboronic acid ester compound represented by general formula (2), shown below, 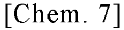 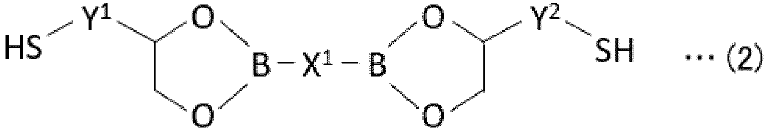 where, in general formula (2), X¹ is a single bond or any divalent group, and Y¹ and Y² are each independently a single bond or a divalent hydrocarbon group.

According to the production method of the present embodiment, a radical reaction is used to form crosslinks among the diene elastomer via a specific skeleton, thereby enabling easy production of the crosslinked elastomer set forth above.

The diene elastomer that is used in the production method of the present embodiment is the same as previously described with regards to the crosslinked elastomer.

In the production method of the present embodiment, the crosslinked elastomer can be obtained, more specifically, by compounding the radical initiator and the diboronic acid ester compound with the previously described diene elastomer, performing mixing thereof using a mixer or the like, and then heating the mixture. The heating temperature and time are preferably adjusted as appropriate in consideration of the vinyl bond content of the used diene elastomer, the type of used radical initiator, the amounts thereof that are used, and so forth.

Moreover, in addition to the diene elastomer, the radical initiator, and the diboronic acid ester compound, appropriate amounts of other components may be further compounded in the production method of the present embodiment to the extent that this does not deviate from the object. Examples of other components include fillers such as carbon black. Moreover, in a case in which a crosslinked elastomer having sulfur crosslinking in addition to crosslinking with the diboronic acid ester skeleton unit is to be produced, a vulcanization system including a vulcanizing agent such as sulfur, a vulcanization accelerator, and so forth can be compounded as appropriate.

The radical initiator may be an inorganic peroxide such as potassium persulfate, sodium persulfate, ammonium persulfate, potassium superphosphate, or hydrogen peroxide; an organic peroxide such as t-butyl peroxide, cumene hydroperoxide, p-menthane hydroperoxide, di-t-butyl peroxide, t-butyl cumyl peroxide, acetyl peroxide, isobutyryl peroxide, octanoyl peroxide, dibenzoyl peroxide, 3,5,5-trimethylhexanoyl peroxide, or t-butyl peroxyisobutyrate; an azo compound such as azobisisobutyronitrile, azobis-2,4-dimethylvaleronitrile, azobiscyclohexanecarbonitrile, or azobis(methyl isobutyrate); or the like, for example. One of these radical initiators may be used individually, or two or more of these radical initiators may be used in combination. Of these examples, an azo compound is preferable as the radical initiator, and azobisisobutyronitrile is more preferable as the radical initiator.

The amount of the radical initiator that is used relative to 100 parts by mass of the diene elastomer in the production method of the present embodiment can be set as not less than 0.1 parts by mass and not more than 3 parts by mass, but is not specifically limited thereto. In this case, a smooth crosslinking reaction can be instigated.

The amount of oil that is compounded in the production method of the present embodiment is preferably small from a viewpoint of instigating a smoother crosslinking reaction. Specifically, the amount of oil that is used relative to 100 parts by mass of the diene elastomer is preferably 5 parts by mass or less, more preferably 3 parts by mass or less, and even more preferably substantially 0 parts by mass.

Likewise, the amount of age resistor that is compounded in the production method of the present embodiment is preferably small from a viewpoint of instigating a smoother crosslinking reaction. Specifically, the amount of age resistor that is used relative to 100 parts by mass of the diene elastomer is preferably 0.8 parts by mass or less, more preferably 0.4 parts by mass or less, and even more preferably substantially 0 parts by mass.

### <Diboronic acid ester compound>

The diboronic acid ester compound that is used in the production method of the present embodiment is a compound that is represented by the previously described general formula (2) and that functions as a crosslinking agent. X¹ in general formula (2) is the same as previously described with regards to X¹ in general formula (1). Moreover, the divalent group that can constitute Y¹ and Y² in general formula (2) may be an alkylene group having a carbon number of 1 to 3, for example. However, it is preferable that Y¹ and Y² in general formula (2) are each a single bond.

The amount of the diboronic acid ester compound that is used relative to 100 parts by mass of the diene elastomer in the production method of the present embodiment is preferably 20 parts by mass or less. In this case, it is possible to obtain a crosslinked elastomer in which adequate elastomer properties are retained. From the same viewpoint, the amount of the diboronic acid ester compound that is used relative to 100 parts by mass of the diene elastomer is more preferably 16 parts by mass or less, and even more preferably 11 parts by mass or less. On the other hand, although no specific limitations are placed on the lower limit for the amount of the diboronic acid ester compound that is used relative to 100 parts by mass of the diene elastomer so long as this amount is more than 0 parts by mass, the amount of the diboronic acid ester compound is preferably 1 part by mass or more, and more preferably 2 parts by mass or more from a viewpoint of increasing strength of the obtained crosslinked elastomer to a similar degree as with sulfur crosslinking.

### EXAMPLES

The following describes the present disclosure in more detail through Examples. However, these Examples are for illustrative purposes and are not intended to limit the scope of the present disclosure in any way.

Note that the following provides not only examples of the crosslinked elastomer and production method thereof according to the present disclosure, but also of decrosslinking of the crosslinked elastomer and recrosslinking after decrosslinking as a single series.

### (Production of crosslinked elastomer)

Elastomer compositions were produced according to formulations shown in Table 1. Next, each elastomer composition was heated under conditions shown in Table 1 and the storage modulus G' thereof was measured using a rubber process analyzer (produced by Alpha Technologies). The results are shown in Table 1. In each of the examples, the storage modulus G' was of roughly the desired value. Therefore, crosslinking was judged to have occurred.

Note that Reference Example 1 is an example of sulfur crosslinking (vulcanization) in which carbon black is not used as a filler, whereas Examples 1-1 to 1-4 are examples in which conditions are appropriately adjusted so as to obtain a storage modulus G' close to that in Reference Example 1 without using carbon black. Likewise, Reference Example 2 is an example of sulfur crosslinking (vulcanization) in which carbon black is used as a filler, whereas Example 1-5 is an example in which conditions are appropriately adjusted so as to obtain a storage modulus G' close to that in Reference Example 2 using carbon black.

### [Table 1]

**Table 1**

| | | Reference Example 1 | Example 1-1 | Example 1-2 | Example 1-3 | Example 1-4 | Reference Example 2 | Example 1-5 |
|---|---|---|---|---|---|---|---|---|
| Diene elastomer *1 | Parts by mass | 100 | 100 | 100 | 100 | 100 | 100 | 100 |
| BDB *2 | | 0 | 3 | 5 | 10 | 5 | 0 | 5 |
| CB *3 | | 0 | 0 | 0 | 0 | 0 | 50 | 50 |
| Radical initiator *4 | | 0 | 0.1 | 0.1 | 0.1 | 0.3 | 0 | 0.5 |
| Vulcanization accelerator DPG *5 | | 0.6 | 0 | 0 | 0 | 0 | 0.6 | 0 |
| Vulcanization accelerator MBTS *6 | | 0.6 | 0 | 0 | 0 | 0 | 0.6 | 0 |
| Vulcanization accelerator TBBS *7 | | 0.6 | 0 | 0 | 0 | 0 | 0.6 | 0 |
| Sulfur | | 1 | 0 | 0 | 0 | 0 | 1 | 0 |
| Proportion of BDB skeleton unit | Mass% | 0 | 2.9 | 4.8 | 9.1 | 4.8 | 0.0 | 4.8 |
| Heating temperature | °C | 160 | 160 | 160 | 160 | 120 | 160 | 120 |
| Heating time | min | 20 | 180 | 180 | 180 | 20 | 20 | 60 |
| Storage modulus G' of crosslinked elastomer | kPa | 570 | 300 | 350 | 410 | 420 | 800 | 800 |

| | | | | | | | | |
|---|---|---|---|---|---|---|---|---|
| *1 Diene elastomer: TUFDENE^{®} 2000R (TUFDENE is a registered trademark in Japan, other countries, or both) produced by Asahi Kasei Corporation, styrene-butadiene rubber, vinyl bond content 10 mass% to 26 mass%, weight-average molecular weight 373,000 (to 3 significant figures) *2 BDB: Diboronic acid ester compound represented by following formula (5) (synthetic product) 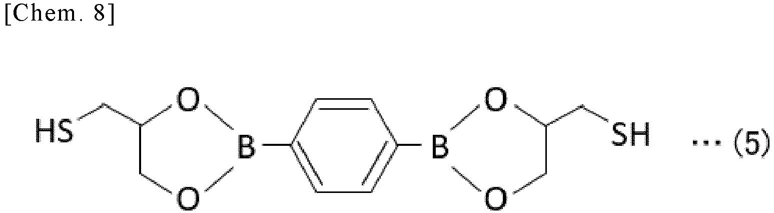 *3 CB: HAF grade carbon black *4 Radical initiator: Azobisisobutyronitrile (AIBN) *5 Vulcanization accelerator DPG: 1,3-Diphenylguanidine *6 Vulcanization accelerator MBTS: Di-2-benzothiazolyl disulfide *7 Vulcanization accelerator TBBS: N-(tert-Butyl)-2-benzothiazolesulfenamide | | | | | | | | |

Note that crosslinked elastomers obtained in Examples 1-1 to 1-5 were confirmed to include a diboronic acid ester skeleton unit represented by the following formula (6): 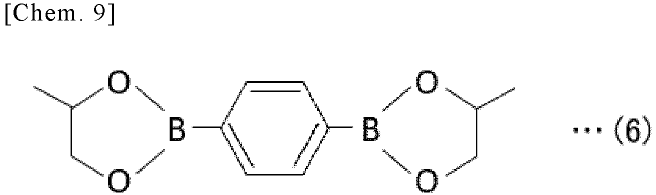 through appropriate use of solvent NMR. Moreover, in these crosslinked elastomers, a crosslink was formed through direct bonding of the above-described diboronic acid ester skeleton unit to a carbon that was a constituent of a vinyl group remaining in a vinyl bonded butadiene unit in the diene elastomer.

### (Decrosslinking treatment of crosslinked elastomer)

The crosslinked elastomer obtained in Example 1-4 was selected as a crosslinked elastomer in which carbon black was not mixed and the crosslinked elastomer obtained in Example 1-5 was selected as a crosslinked elastomer in which carbon black was mixed.

Each of these crosslinked elastomers was finely milled and was then loaded into tetrahydrofuran (THF; SP value: 8.95 (cal/cm³)^{1/2}) as an organic solvent. Phenylboronic acid (PhB(OH)₂) was further added as a monoboronic acid compound (BA), was thoroughly mixed therewith, and then the mixture was left to settle at room temperature (approximately 25°C) for 1 day. In the above, the concentration of the crosslinked elastomer (mass proportion of crosslinked elastomer among total of crosslinked elastomer and organic solvent) and the molar abundance ratio of the monoboronic acid compound relative to the diboronic acid ester skeleton unit in the crosslinked elastomer (BA/BDB skeleton unit) were set as shown in Table 2. After settling, casting was performed and solvent was evaporated to yield a treated elastomer.

### <Evaluation of decrosslinking>

The treated elastomer that was obtained was used to perform a roll forming operation. A case in which roll forming could be performed was evaluated as a case in which softness had been imparted as a result of decrosslinking (crosslinking sites returning to a non-crosslinked state). The results are shown in Table 2.

### [Table 2]

**Table 2**

| | Example 2-1 | Example 2-2 | Example 2-3 | Example 2-4 | Example 2-5 | Example 2-6 | Example 2-7 |
|---|---|---|---|---|---|---|---|
| Crosslinked elastomer (Example No.) | 1-4 (CB not used) | | | 1-5 (CB used) | | | |
| Crosslinked elastomer concentration (mass%) | 10 | 10 | 10 | 13 | 50 | 50 | 50 |
| BA/BDB skeleton unit (molar abundance ratio) | 3 | 3.5 | 4 | 2.5 | 2.5 | 3 | 3.5 |
| Evaluation of roll formability (decrosslinking) | O | O | O | O | O | O | O |
| Remarks relating to formed article of treated elastomer | Shrinkage | Shrinkage | Similar to initial | Fairly rough surface | Similar to initial | Similar to initial | Similar to initial |
| *Similar to initial: Similar quality to diene elastomer before crosslinking | | | | | | | |

It can be seen from Table 2 that an evaluation result of "O" was given for decrosslinking in all of Examples 2-1 to 2-7. In other words, the crosslinked elastomers obtained in Examples 1-4 and 1-5 could easily be decrosslinked by causing contact of the crosslinked elastomer with a monoboronic acid compound in the presence of a specific organic solvent.

Also note that for the treated elastomers (decrosslinked elastomers) obtained in Examples 2-1 to 2-7, it was confirmed through appropriate use of solution NMR that a site where the skeleton represented by formula (6) was bonded in the crosslinked elastomer prior to treatment had been capped by a functional group represented by the following formula (7): 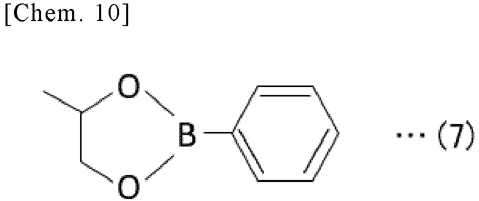 and thus crosslinking had been undone (crosslinking sites had returned to a non-crosslinked state). At the same time, it was confirmed through appropriate use of solution NMR that a diboronic acid compound ((1,4-phenylene)diboronic acid) represented by the following formula (8): 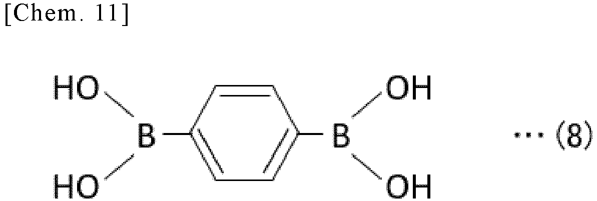 which is derived from the aforementioned skeleton, had been produced.

The crosslinked elastomers obtained in Examples 1-1 to 1-3 also include the diboronic acid ester skeleton unit described above. Therefore, these crosslinked elastomers are thought to be easy to decrosslink through the same treatment as described above.

### (Recrosslinking of decrosslinked elastomer)

The decrosslinked elastomer (treated elastomer) obtained in Example 2-2 or Example 2-3 was selected as a decrosslinked elastomer in which carbon black was not mixed and the decrosslinked elastomer (treated elastomer) obtained in Example 2-5 was selected as a decrosslinked elastomer in which carbon black was mixed.

Each of these decrosslinked elastomers was loaded into a solvent shown in Table 3 together with the diboronic acid compound produced during decrosslinking treatment. A radical initiator was further added according to a formulation shown in Table 3, and these were left to settle over night at room temperature (approximately 25°C). In the above, the concentration of the decrosslinked elastomer (mass proportion of decrosslinked elastomer among total of decrosslinked elastomer and solvent) was set as shown in Table 3. After settling, casting was performed and solvent was evaporated to yield a treated elastomer.

### <Evaluation of crosslinking (recrosslinking)>

The obtained treated elastomer was heated at 120°C for 10 minutes to 30 minutes (until the value of the storage modulus G' stabilized) and the storage modulus G' thereof was measured using a rubber process analyzer (produced by Alpha Technologies). In each of the examples, the measured storage modulus G' was at least 20% compared to the storage modulus G' of the crosslinked elastomer prior to addition of the monoboronic acid compound described above. Therefore, crosslinking was judged to have occurred in each of the examples. More specifically, crosslinking was judged to have occurred to a more sufficient degree and an evaluation of "O" was given in a case in which the measured storage modulus G' was 50% or more compared to the storage modulus G' of the crosslinked elastomer prior to addition of phenylboronic acid described above, whereas an evaluation of "Δ" was given in a case in which the measured storage modulus G' was less than 50% compared thereto. The results are shown in Table 3.

### [Table 3]

**Table 3**

| | | Example 3-1 | Example 3-2 | Example 3-3 | Example 3-4 | Example 3-5 | Example 3-6 | Example 3-7 |
|---|---|---|---|---|---|---|---|---|
| Decrosslinked elastomer (Example No.) | | 2-2 (CB not used) | | 2-3 (CB not used) | | 2-5 (CB used) | | |
| Decrosslinked elastomer | Parts by mass | 100 | 100 | 100 | 100 | 100 | 100 | 100 |
| Radical initiator *4 | Parts by mass | 0.5 | 0.5 | 0.3 | 0.3 | 1 | 1 | 0.5 |
| Type of solvent | | iPrOH | MeOH:THF 1:1 | MeOH:THF 1:1 | MeOH:THF 2:1 | MeOH:THF 1:1 | MeOH:THF 2:1 | MeOH:THF 4:1 |
| SP value of solvent (mixed solvent) | (cal/cm³)^{1/2} | 10.41 | 10.43 | 10.43 | 11.36 | 10.43 | 11.36 | 12.38 |
| Decrosslinked elastomer concentration | Mass% | 10 | 10 | 10 | 10 | 50 | 50 | 50 |
| Evaluation of crosslinking (recroslinking) | | Δ | O | O | O | Δ | O | O |
| iPrOH: Isopropanol (SP value: 10.41), MeOH: Methanol, THF: Tetrahydrofuran (SP value: 8.95) | | | | | | | | |

It can be seen from Table 3 that the decrosslinked elastomers obtained in Examples 2-2, 2-3, and 2-5 could easily be crosslinked (recrosslinked) by causing contact of the decrosslinked elastomer with a diboronic acid compound in the presence of a specific solvent.

Note that the treated elastomers (recrosslinked elastomers) obtained in Examples 3-1 to 3-7 were confirmed to include a diboronic acid ester skeleton unit represented by the following formula (6): 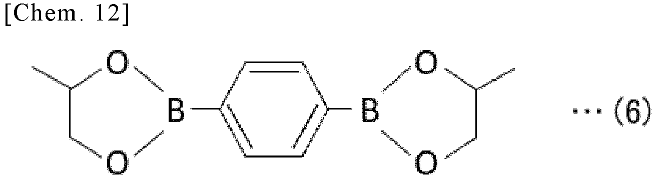 through appropriate use of solvent NMR. In other words, the treated elastomers (recrosslinked elastomers) obtained in Examples 3-1 to 3-7 had substantially the same structure as the crosslinked elastomers obtained in Examples 1-1 to 1-5.

### INDUSTRIAL APPLICABILITY

According to the present disclosure, it is possible to provide a crosslinked elastomer that can easily be decrosslinked.

Moreover, according to the present disclosure, it is possible to provide a method of producing a crosslinked elastomer by which the aforementioned crosslinked elastomer can easily be produced.

## Claims

1. A crosslinked elastomer obtained through crosslinking of a diene elastomer, wherein
the diene elastomer has a vinyl bond content of 30 mass% or less and a weight-average molecular weight of 1,000 or more, and
the crosslinked elastomer includes, at a crosslinking site, a diboronic acid ester skeleton unit represented by general formula (1), shown below, 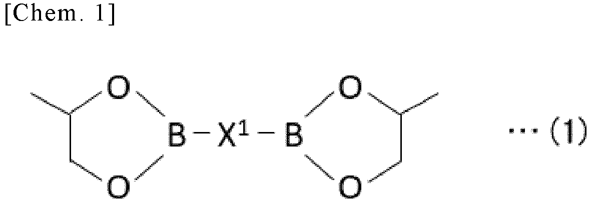
where, in general formula (1), X¹ is a single bond or any divalent group.

2. The crosslinked elastomer according to claim 1, wherein a proportion constituted by the diboronic acid ester skeleton unit is 17 mass% or less.

3. A method of producing the crosslinked elastomer according to claim 1 or 2, comprising crosslinking the diene elastomer in the presence of a radical initiator using a diboronic acid ester compound represented by general formula (2), shown below, 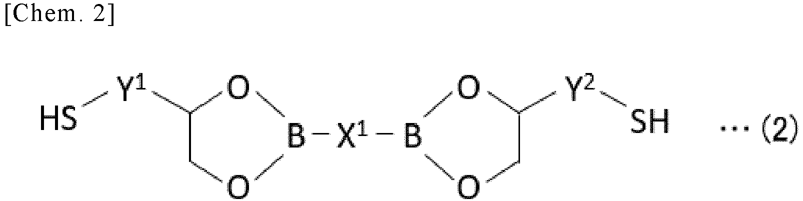 where, in general formula (2), X¹ is a single bond or any divalent group, and Y¹ and Y² are each independently a single bond or a divalent hydrocarbon group.
